# EUROPÄISCHE PATENTSCHRIFT

(11) **EP 1 014 632 B1**
(45) Veröffentlichungstag und Bekanntmachung des Hinweises auf die Patenterteilung: **28.07.2004**
(21) Anmeldenummer: 99250445.6
(22) Anmeldetag: 23.12.1999
(51) Int. Cl.: H04L 12/64, H04Q 11/04

(54) **Verfahren zur Übertragung von Daten und Switch-Einrichtung zur Durchführung des Verfahrens**
Method and switching device to transfer data
Procedure et dispositif de commutation pour le transfert des données

(30) Priorität: 23.12.1998 DE 19860757
(43) Veröffentlichungstag der Anmeldung: 28.06.2000
(73) Patentinhaber: Teles AG Informationstechnologien, 10587 Berlin (DE)
(72) Erfinder: Schindler, Sigram Prof.Dr., 14129 Berlin (DE); Wegener, Rochus, 13503 Berlin (DE); Illg, andreas, 10555 Berlin (DE); Paetsch, Frank, 10961 Berlin (DE); Lüdtke, Karsten, 12167 Berlin (DE); Schönberger, Peter, 10827 Berlin (DE)
(74) Vertreter: Müller, Wolfram Hubertus, Dipl.-Phys.

(56) Entgegenhaltungen:
- WO-A-98/48542
- DE-A- 19 645 368

## Beschreibung

Die Erfindung betrifft ein Verfahren zur Übertragung von Daten von einer ersten TK- (Telekommunikations) Einheit zu einer zweiten TK-Einheit gemäß dem Oberbegriff des Anspruchs 1 und eine Vorrichtung zur Durchführung des Verfahrens.

### Hintergrund der Erfindung

Unter dem Stichwort "Internet-Telefonie" sind Verfahren bekannt, bei denen von einer ersten Telekommunikations-Endeinrichtung wie einem Telefon, Bildtelefon oder Telefax zu einer zweiten Telekommunikations-Endeinrichtung zu übertragene Daten unter Zwischenschaltung eines Paketvermittlungsnetzes, insbesondere des Internets, übertragen werden. Die zu übertragenden Daten werden dabei vor Eintritt in das Paketvermittlungsnetz mittels geeigneter Server oder Gateways, auch als "Voice over IP (VoIP)" Server bezeichnet, komprimiert und in Paketen angeordnet. Dies erfolgt beispielsweise entsprechend der ITU-T Empfehlung H.323. Nach Verlassen des Paketvermittlungsnetzes werden die Datenpakete depaketiert und über übliche POTS/ISDN-Leitungen an die gerufene TK-Endeinrichtung übertragen. "Voice over IP" ist dabei beispielhaft für eine Paketvermittlung. Ebenfalls können etwa "Voice over ATM (VoATM)" oder "Voice over Frame Relay (VoFR)" Server benutzt werden.

Internet-Telefonie zeichnet sich durch den Vorteil aus, daß die hohen Kosten für Ferngespräche vermieden werden. Es besteht jedoch der Nachteil, daß bei einem hohen Datenaufkommen im Internet die Verzögerungszeit bei der Übertragung der einzelnen Datenpakete derart lang wird, daß z.B. eine angenehme Gesprächsverbindung mit dem Telefonpartner nicht mehr möglich ist. Auch können Paketverluste auftreten.

Aus der DE-A1-196 45 368 ist ein Verfahren zur Übertragung von digitalen Daten in einem Telekommunikationsnetz bekannt, bei dem ein Switch bei Vorliegen eines entsprechenden Steuersignals während einer bestehenden Verbindung einen Wechsel zwischen einer paketvermittelten und einer leitungsvermittelten Datenübertragung vornimmt. Dieses Verfahren benötigt zu seiner Implementierung Switch-Einrichtungen, die sowohl eine paketvermittelte als auch eine leitungsvermittelte Datenübertragung vornehmen können. Eine Anwendung mit vorhandener Internet-Telefonie Infrastruktur ist nicht ohne weiteres möglich.

Es besteht das Bedürfnis nach einem Verfahren zur Datenübertragung, das auf die vorhandenen Möglichkeiten zur Übertragung von Daten über ein Paketvermittlungsnetz und die hierzu vorhandenen Infrastrukturen zurückgreift, dabei jedoch einem Benutzer die Möglichkeit an die Hand gibt, entsprechend seinen Bedürfnissen und Wünschen die Qualität der Datenübertragung zu bestimmen.

### Aufgabe der Erfindung

Dementsprechend liegt der vorliegenden Erfindung die Aufgabe zugrunde, ein Verfahren zur Übertragung von Daten von einer ersten TK-Einheit zu einer zweiten TK-Einheit und eine Switch-Einrichtung zur Durchführung des Verfahrens zur Verfügung zu stellen, die es einem Nutzer ermöglichen, die Qualität einer Datenübertragung, insbesondere die Bandbreite, nach seinen Wünschen und Bedürfnissen dynamisch festzulegen, wobei auf vorhandener Telekommunikations-Infrastruktur zur Übertragung von Daten über ein Paketvermittlungsnetz aufgebaut wird.

### Zusammenfassung der Erfindung

Diese Aufgabe wird erfindungsgemäß durch ein Verfahren mit den Merkmalen des Anspruchs 1 und eine Switch-Einrichtung mit den Merkmalen des Anspruchs 12 gelöst. Bevorzugte und vorteilhafte Ausgestaltungen der Erfindung sind in den Unteransprüchen angegeben.

Danach erfolgt bei Vorliegen eines durch einen Nutzer oder ein Netzwerkmanagement ausgelösten Steuersignals eine Übertragung der Daten mittels einer "Bypass"-Verbindung höherer Bandbreite über ein Leitungsvermittlungsnetz, wobei das Paketvermittlungsnetz und die zugehörigen Paketvermittlungseinrichtungen zum Paketieren bzw. Depaketieren der zu übertragenden Daten umgangen werden. Zum Aufbau eines entsprechenden Bypasses sind gesonderte Switch-Einrichtungen vorgesehen, die die vorhandene Netz-Infrastruktur ergänzen und die entsprechend den Vorgaben des Nutzers oder des Netzwerkmanagements entscheiden, ob sie die Daten an das Paketvermittlungsnetz oder an das Leitungsvermittlungsnetz leiten.

Die Daten passieren dabei bei Übertragung über ein Paketvermittlungsnetz zunächst eine erste Switch-Einrichtung und anschließend eine Paketvermittlungseinrichtung, die beide Teil eines Leitungsvermittlungsnetzes sind, wobei die Switch-Einrichtung als gegenüber der Paketvermittlungseinrichtung gesonderte Einheit ausgeführt ist. Die Daten werden in nicht paketierter Form von der Switch-Einrichtung an die Paketvermittlungseinrichtung gesandt. Bei Übertragung der Daten über ein Leitungsvermittlungsnetz werden die Daten von der Switch-Einrichtung unter Umgehung der Paketvermittlungseinrichtungen an das Leitungsvermittlungsnetz geleitet.

Ein Nutzer kann während einer bestehenden Verbindung beliebig zwischen den beiden Übertragungswegen hin und her schalten und auf diese Weise die gewünschte Bandbreite auswählen.

Beispielsweise versucht ein Nutzer zunächst, über das Paketvermittlungsnetz eine Verbindung zu einem anderen Teilnehmer aufzubauen. Wenn er nach Aufbau der Verbindung feststellt, daß die Verbindungsqualität aufgrund einer Überlastung des Paketvermittlungsnetzes und der damit verbundenen Zeitverzögerungen oder aus anderen Gründen nicht akzeptabel ist, kann er durch einen per Tastendruck am Telefon ausgelösten Steuerbefehl veranlassen, daß die Daten mit fester Bandbreite und geringen Verzögerungszeiten über das Leitungsvermittlungsnetz zum anderen Teilnehmer übertragen werden, wobei der "Datenstau" des Paketvermittlungsnetzes umgangen wird.

Die vorliegende Erfindung ermöglicht es somit einem Nutzer, während einer Verbindung zwischen zwei TK-Einheiten dynamisch zwischen einer schmalbandigen Datenübertragung über das Paketvermittlungsnetz und einer breitbandigeren, insbesondere eine feste Bandbreite zur Verfügung stellenden Übertragung über das Leitungsvermittlungsnetz zu wählen und nach Wunsch hin- und herzuschalten.

Unter einer "Verbindung" zwischen zwei TK-Einheiten wird im Rahmen dieser Erfindung eine Ebene-7-Verbindung (L7-Verbindung) gemäß dem OSI-Referenzmodell verstanden. Ob die zu übertragenden Daten in Datenpaketen über ein Paketvermittlungsnetz oder mit fester Bandbreite über ein Leitungsvermittlungsnetz übertragen werden, tangiert die Ebene-7-Verbindung nicht.

Eine erfindungsgemäße Switch-Einrichtung ist vergleichsweise einfach aufgebaut und kommt im wesentlichen mit einem logischen Dateneingang, einem ersten logischen Ausgang zu einem Paketvermittlungsnetz, einem zweiten logischen Ausgang zu einem Leitungsvermittlungsnetz und einer Steuereinrichtung aus, die während einer bestehenden Verbindung in Abhängigkeit von den Steuersignalen des Nutzers oder eines Netzwerkmanagements ankommende Daten einer Verbindung entweder zum ersten oder zum zweiten logischen Ausgang leitet. Die am Dateneingang anliegende Daten werden dabei ohne eine Paketierung zum ersten logischen Ausgang zum Paketvermittlungsnetz geleitet und liegen dort als nicht paketierte Daten vor.

Bevorzugt ist in die Switch-Einrichtung des weiteren eine Line-switching-Einrichtung zum Durchschalten von Fernsprech kanälen über ein Leitungsvermittlungsnetz integriert, jedoch kann diese auch in einer nachgeschalteten Einheit realisiert sein.

Die Switch-Einrichtungen werden in einem Telekommunikationsnetz bevorzugt derart eingesetzt, daß sie das Paketvermittlungsnetz und die zugeordneten Paketvermittlungseinrichtungen zum Paketieren bzw. Depaketieren der Daten (Voice over IP Server) einrahmen. Insbesondere ist eine erste Switch-Einrichtung einer Paketvermittlungseinrichtung zum Paketieren der Daten vorgeschaltet und überträgt diese Switch-Einrichtungen die Daten zu einer zweiten Switch-Einrichtung, die einer Paketvermittlungseinrichtung zum Depaketieren der Daten nachgeschaltet ist. Die erste Switch-Einrichtung prüft dabei, ob ein Steuersignal zur Übertragung der Daten über das Leitungsvermittlungsnetz vorliegt und veranlaßt für diesen Fall eine Übertragung der Daten über das Leitungsvermittlungsnetz.

Die vorliegende Erfindung geht von der Überlegung aus, daß es allein darauf ankommt, entsprechend den Vorgaben des Nutzers oder eines Netzwerkmanagements wahlweise eine Überbrückung des Paketvermittlungsnetzes durch Übertragung der Daten über ein Leitungsvermittlungsnetz zur Verfügung zu stellen. Dies wird durch die Switch-Einrichtungen ermöglicht, die die ankommenden Daten entweder zum Paketvermittlungsnetz oder zum Leitungsvermittlungsnetz routen, bevor eine Paketierung der Daten zur Versendung über das Paketvermittlungsnetz erfolgt.

Dementsprechend ist es im wesentlichen bedeutungslos, ob bei Übertragung der Daten über das Leitungsvermittlungsnetz weiterhin Daten zu den Voice over IP Servern des Paketvermittlungsnetzes gesandt werden. In einer ersten Variante der Erfindung ist dies nicht der Fall, werden die Daten also ausschließlich über das Paketvermittlungsnetz übertragen.

In einer zweiten Variante der Erfindung werden die Daten in der ersten Switch-Einrichtung verdoppelt und dann sowohl über das Leitungsvermittlungsnetz als auch über das Paketvermittlungsnetz übertragen, wobei die über das Paketvermittlungsnetz übertragenen Daten an sich nicht mehr von Bedeutung sind. Es ist für diesen Fall jedoch sicherzustellen, daß die Switch-Einrichtung, die die von der ersten Switch-Einrichtung übersandten Daten empfängt und an die empfängerseitige Zieleinrichtung weiterleitet, die parallel über das Paketvermittlungsnetz übersandten, an sich identischen Daten unterdrückt, d.h. nur die Daten eines Weges weiterleitet.

Zu den Daten einer Verbindung muß daher eine Zuordnung zwischen den über das Paketvermittlungsnetz und das Leitungsvermittlungsnetz übersandten Daten erfolgen. Diese Zuordung kann beispielsweise über die Absenderinformationen erfolgen, insbesondere die Rufnummer der rufenden TK-Einheit.

Das Steuersignal, mittels dessen der Nutzer oder das Netzwerkmanagement die Switch-Einrichtung anweist, die Daten über das Leitungsvermittlungsnetz oder das Paketvermittlungsnetz zu übertragen, wird bevorzugt durch ein bestimmtes Signal kodiert, das als DTMF-Innenbandsignal oder als Außenbandsignal zur Switch-Einrichtung übertragen wird. Ein geeignetes DTMF-Codesignal kann in der jeweiligen TK-Einheit vorprogrammiert und mittels eines Tastendruckes durch den Nutzer auslöst oder alternativ durch Drücken von Bedientasten in einer bestimmten Reihenfolge realisiert werden.

Bei den zu übertragenden Daten handelt es sich insbesondere um Audio-, Video- oder Faxdaten und bei den Paketvermittlungseinrichtungen um Voice over IP Server, Voice over ATM Server oder Voice over Frame Relay Server, die die Audio-, Video- oder Faxdaten über das Paketvermittlungsnetz routen. In an sich bekannter Weise weisen die entsprechenden Server Mittel zum Digitalisieren der Signale, sofern sie noch nicht in digitaler Form vorliegen, Mittel zur Durchführung einer Datenkompression und Mittel zum Paketieren der Daten auf.

Sofern im Rahmen dieser Erfindung von einer TK-Einheit die Rede ist, so steht dieser Begriff für ein beliebiges Endgerät oder eine beliebige Netzwerkeinheit, die analoge oder digitale Signale an eine andere Einheit übersenden kann. Insbesondere kann die TK-Einheit ein analoges Telefon, ein ISDN-Telefon, ein Bildtelefon, ein Faxgerät oder ein Personal Computer mit Telefonie-Software sein. Es kann sich jedoch auch um ein Netzwerkgerät, wie einen Switch oder einen Router, handeln.

### Beschreibung eines Ausführungsbeispiels

Die Erfindung wird nachfolgend unter Bezugnahme auf die Figuren der Zeichnung anhand eines Ausführungsbeispiels näher erläutert. Es zeigen:
- Figur 1 -: schematisch ein Telekommunikationsnetz mit einer Infrastruktur, auf der das erfindungsgemäße Verfahren durchführbar ist;
- Figur 2 -: eine schematische Darstellung einer erfindungsgemäßen Switch-Einrichtung und
- Figur 3 -: ein Ablaufdiagramm des erfindungsgemäßen Verfahrens.

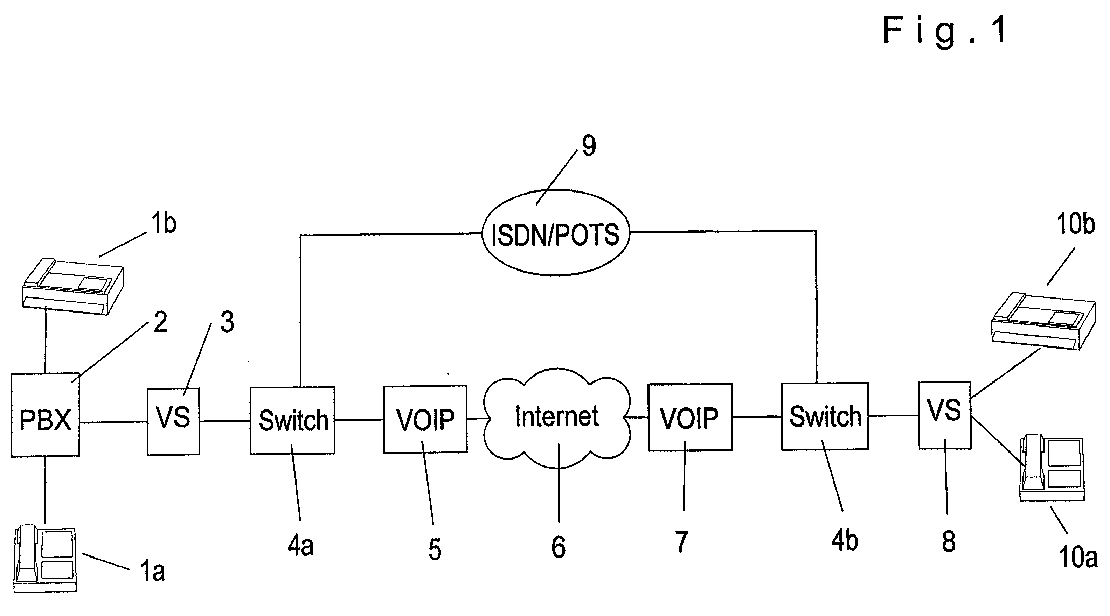

Figur 1 zeigt TK-Endeinrichtungen 1a, 1b, etwa ein analoges Telefon, ein ISDN-Telefon, ein Bildtelefon oder ein Faxgerät, die über eine Telekommunikationsanlage (PBX) 2 in üblicher Weise an eine Ortsvermittlungsstelle (VS) 3 eines Telekommunikationsnetzes angeschlossen sind. An die PBX 2 können direkt oder über ein lokales Netz weitere Endeinrichtungen angeschlossen sein. Auch können die Endeinrichtungen 1a, 1b direkt an eine Ortsvermittlungsstelle 3 angeschlossen sein.

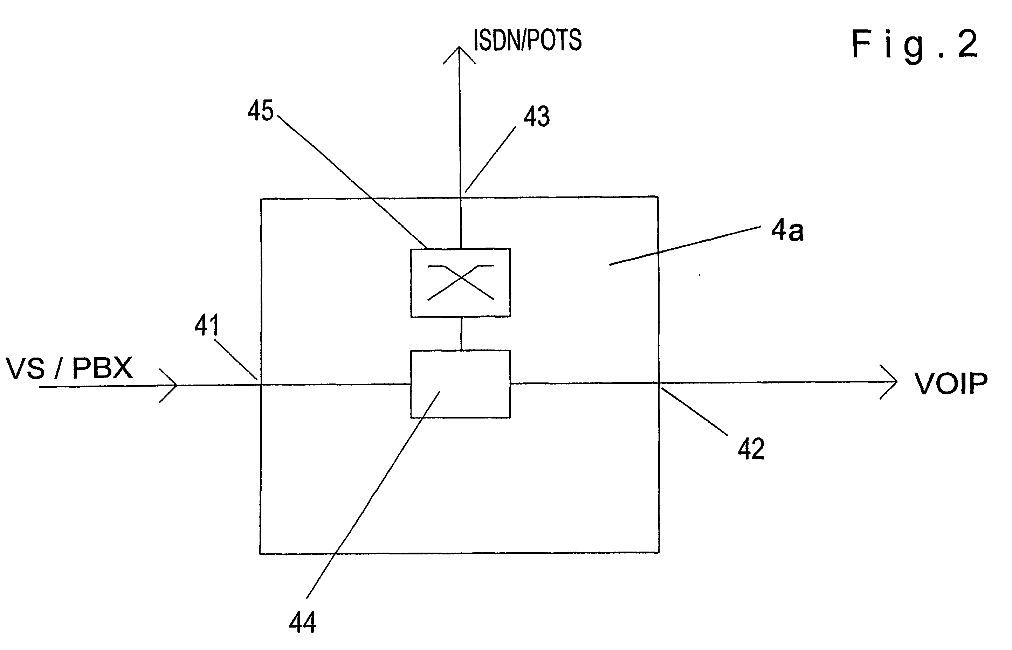

Die Vermittlungsstelle 3 ist über einen Switch 4a, der in Figur 2 näher erläutert werden wird, mit einem sogenannten Voice over IP (VOIP)-Server 5 verbunden, der ankommende Daten paketiert und über das Internet 6 sendet. Die Vermittungsstelle 2, der Switch 4a und der VOIP-Server 7 sind Teil eines Leitungsvermittlungsnetzes. Nach Übertragung der Daten in Datenpaketen über das Internet 6 schließt sich empfängerseitig an das Internet 6 erneut ein VOIP-Server 7 an, der über einen weiteren Switch 4b und eine Vermittlungsstelle 8 mit empfängerseitigen TK-Endeinrichtungen wie einem Telefon 10a oder einem Faxgerät 10b verbunden ist. Die beiden Switches 4a, 4b können über ein Leitungsvermittlungsnetz 9 eine Verbindung miteinander aufbauen, bei dem es sich um ein beliebiges Netz handeln kann, das leitungsvermittelte Verbindungen zur Verfügung stellt, etwa das Netz der Deutsche Telekom AG.

Es wird darauf hingewiesen, daß das Internet 6 nur als Beispiel für ein Paketvermittlungsnetz genannt ist. Genauso können die Daten in Datenpaketen über ein Intranet, ein ATM-kompatibles Netz oder ein beliebiges anderes Paketvermittlungsnetz übertragen werden. Ebenso steht ein Voice over IP (VOIP)-Server lediglich beispielhaft für einen Server, der die Daten paketiert und über ein Paketvermittlungsnetz sendet. Weitere hierzu geeignete Server sind beispielsweise Voice over ATM Server oder Voice over Frame Relay Server.

Bei einem Anruf vom Telefon 1a zu einem empfängerseitigen Telefon 10a oder bei einer Faxübermittlung zwischen den Faxgeräten 1b, 10b routet die Vermittlungsstelle 3 die zu übertragenden Daten an den VOIP-Server 5, wobei die Funktion des Switches 4a zunächst außer acht gelassen wird. Der VOIP-Server 5 komprimiert die ankommenden Audio- oder Videodaten bzw. demoduliert die Faxinformation und setzt die Daten auf Datenpakete, die über das Internet 6 übertragen werden. Dies erfolgt etwa entsprechend der ITU-T Empfehlung H.323. Ein VOIP-Server 7 am empfängerseitigen Ende des Internets 6 reversiert den Prozeß der Paketierung der Daten, d.h. depaketiert die Daten und sendet die zu übertragenden Daten über den Switch 4b und die Vermittlungsstelle 8 zu den Endgeräten 10a bzw. 10b.

Durch das Übertragen der Daten unter Zwischenschaltung des Internets erfolgt, entfallen die üblicherweise teuren Fernsprechgebühren.

Es wird nun auf die Funktionsweise und Bedeutung der Switch-Einrichtungen 4a, 4b eingegangen. Gemäß Figur 2 weist eine Switch-Einrichtung 4a einen logischen Dateneingang 41, einen logischen Datenausgang 42 zum Paketvermittlungsnetz 6 bzw. zum VOIP-Server 5, einen logischen Datenausgang 43 zu einem Leitungsvermittlungsnetz 9, eine Steuereinrichtung 44 und eine Line-Switching-Einrichtung 45 auf. Letztere weist ein an sich bekanntes digitales Koppelfeld zum Durchschalten von Fernsprechkanälen des leitungsvermittelten Netzes auf.

Die Eingänge und Ausgänge 41, 42, 43 des Switchs 4a sind dabei auch in umgekehrter Richtung als Eingänge 42, 43 und Ausgang 41 betreibbar, etwa wenn der Switch wie Switch 4b der Fig. 1 sich an ein Paketvermittlungsnetz anschließt, dann also in entsprechender Weise zwei logische Eingänge und einen logischen Ausgang aufweist.

Die Steuereinrichtung 44 besteht aus einem üblichen Mikroprozessor mit Peripheriebausteinen und einer geeigneten Steuerungssoftware. Sie leitet die über den Dateneingang 41 eingehenden Daten für jede Verbindung zwischen zwei TK-Einheiten in Abhängigkeit von Steuersignalen entweder über das Koppelfeld 45 zum Datenausgang 43 zum Leitungsvermittlungsnetz oder über den Ausgang 42 zum VOIP-Server 5. Es handelt sich bei der Steuereinrichtung 44 somit im wesentlichen um einen Schalter.

Die Steuerbefehle an die Steuereinrichtung 44, ob die Daten an den VOIP-Server 5 oder das Leitungsvermittlungsnetz 9 geleitet werden sollen, werden insbesondere durch den Nutzer des sendeseitigen Endgerätes 1a, 1b ausgelöst. Sie können jedoch ebenfalls von einem Netzwerkmanagement oder von einem Nutzer eines empfängerseitigen Endgerätes 10a, 10b ausgesandt werden.

Die Steuerbefehle können auf vielfältige Weise als Innenbandsignal oder als Außenbandsignal realisiert werden, beispielsweise durch eine bestimmte BIT-Folge, die als Innenbandsignal übertragen wird. Bevorzugt wird als Steuersignal ein bestimmtes DTMF-(Dual Tone Multiple Frequency)-Signal, das heißt eine bestimmte Abfolge von DTMF-Tönen verwendet. Die Verwendung von DTMF-Signalen als Code bietet sich insofern an, als diese von üblichen TK-Endgeräten erzeugt werden können.

Die Steuereinrichtung 44 weist dementsprechend Mittel zum Erkennen und Auswerten von Steuersignalen, im vorliegenden Beispiel von DTMF-Signalen auf. Etwa werden digitale Daten in ein analoges Signal umgewandelt und das analoge Signal einer DTMF-Standardanalyse unterworfen. Bei einer Außenband-Signalisierung im ISDN-Standard erfolgt eine Analyse der digitalen Signalisierung. Die Mittel zum Erkennen und Auswerten von Steuersignalen nehmen jeweils einen Vergleich der ankommenden Daten mit einem in der Steuereinrichtung 44 gespeicherten Code bzw. Wert vor.

Die Steuereinrichtung 44 wertet auch Signalisierungsinformationen zu den Verbindungen auf, die der Switch gegebenenfalls von anderen Switches oder Routern erhält.

Es wird darauf hingewiesen, daß der Switch 4a für eine Vielzahl von Verbindungen zwischen TK-Einheiten ein Routing entweder über das Paketvermittlungsnetz oder über das Leitungsvermittlungsnetz vornimmt. Das Steuersignal bzw. der Code zum Wechseln der Übertragungsart kann jedoch für sämtliche Verbindungen der gleiche sein, da jede Verbindung gesondert geroutet bzw. durchgeschaltet wird.

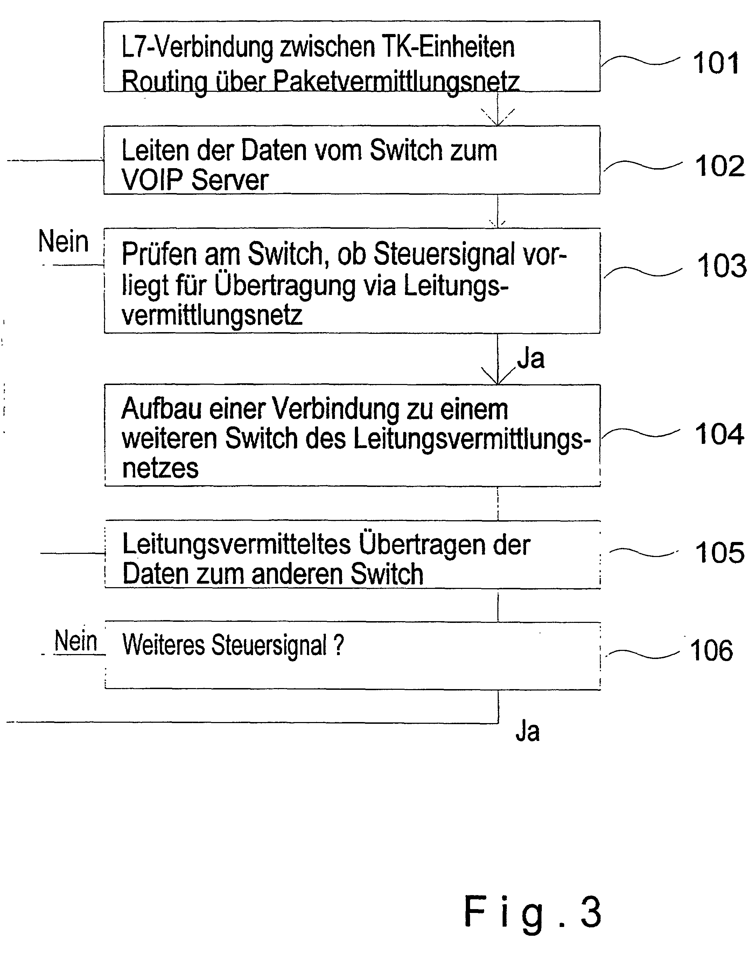

Das erfindungsgemäße Verfahren ist in dem Ablaufdiagramm der Figur 3 dargestellt. Zunächst wird zwischen der sendeseitigen Endeinrichtung 1a, 1b und der empfängerseitigen Endeinrichtung 10a, 10b unter Zwischenschaltung des Paketvermittlungsnetzes 6 eine Verbindung hergestellt, wobei die zu übertragenden Daten mittels der VOIP-Server 5, 7 paketiert bzw. depaketiert und über das Internet 6 versandt werden (Schritt 101).

Der Switch 4a leitet ankommende Daten zunächst zum VOIP-Server 5, wo sie über das Internet 6 zum empfängerseitigen Endgerät 10a, 10b übertragen werden (Schritt 102). Dabei prüft die Steuereinrichtung 44 des Switch 4a, ob ein Steuersignal vorliegt, eine Übertragung der Daten über das Leitungsvermittlungsnetz 9 vorzunehmen (Schritt 103).

Sofern dies nicht der Fall ist, werden die ankommenden Daten weiterhin zum VOIP-Server 5 übertragen. Sofern jedoch ein entsprechendes Steuersignal vorliegt, beispielsweise ein bestimmtes DTMF-Signal vom Switch 4a empfangen wird, baut dieser eine Verbindung zu dem weiteren, empfängerseitigen Switch 4b auf (Schritt 104), sofern nicht bereits eine Verbindung vorliegt (etwa über eine Standleitung), und überträgt die zu übertragenden Daten über das Leitungsvermittlungsnetz 9 zum Switch 4b (Schritt105). Vom Switch 4b werden die Daten in üblicher Weise leitungsvermittelt zur Vermittlungsstelle 8 und von dort zu den empfängerseitigen Endeinrichtungen 10a bzw. 10b übertragen.

Der Switch 4b erkennt dabei anhand der Absenderinformation (etwa dem Parameter "calling party number" im ISDN), das die nun über das Leitungsvermittlungsnetz ankommenden Daten die gleiche Verbindung betreffen, wie die über das Paketvermittlungsnetz übersandten Daten. Durch diese Zuordnung wird verhindert, daß der Switch 4b die Verbindung zur gerufenen TK-Einrichtung 10a, 10b dem Switch 4a als besetzt anzeigt. Es werden nun die über das Leitungsvermittlungsnetz 9 erhaltenen Daten vom Switch 4b weitergeleitet.

Alternativ oder ergänzend erfolgt eine Signalisierung zwischen den Switches 4a und 4b in einem gesonderten Protokoll, das bespielsweise an das CCITT-Signalisierungssystem Nr. 7 angelehnt ist und über dieses hinaus weitere Attribute einer Verbindung wie Übertragung über Paketvermittlungsnetz und/oder Leitungsvermittlungsnetz definiert, so daß die Switches 4a, 4b die über unterschiedliche Wege übersandten Daten der gleichen Verbindung zuordnen.

Bei Vorliegen eines weiteren Steuersignals, das wiederum durch den Nutzer oder alternativ durch ein Netzwerkmanagement ausgelöst wird, werden die Daten vom Switch 4a wieder zum VOIP-Server 5 geleitet (Schritt 106), so daß der Nutzer wahlweise zwischen den beiden Übertragungsarten hin- und herschalten kann.

Bei Übertragung der Daten einer Verbindung über das Leitungsvermittlungsnetz 9 kann entweder vorgesehen sein, daß dann keine Daten mehr an den VOIP-Server 5 bzw. das Internet 6 geleitet werden. Alternativ werden die Daten in der Steuereinrichtung 44 jedoch lediglich kopiert, so daß die Daten dann sowohl über das Leitungsvermittlungsnetz 9 als auch über das Internet 6 gesandt werden. Für diesen Fall ist es erforderlich, daß der endgeräteseitige Switch 4b erkennt, welche zu einer bestimmten Verbindung gehörende Daten bereits über das Leitungsvermittlungsnetz 9 gesandt wurden und diese Daten dann unterdrückt bzw. mißachtet. Die über das Internet 6 gesandten Daten werden nicht benötigt.

Eine Zuordnung zu den identischen, über das Leitungsvermittlungsnetz 9 gesandten Daten erfolgt wiederum etwa über die Absenderinformation. Sobald der Switch 4b über das Leitungsvermittlungsnetz 9 gesandte Daten erhält, werden über das Paketvermittlungsnetz 6 erhaltene Daten der gleichen Verbindung nicht mehr weitergeleitet.

Das beschriebene Verfahren ermöglicht es einem Nutzer, zunächst eine schmalbandige und in Abhängigkeit vom Verkehrsaufkommen auf dem Internet 6 zeitverzögerte Übertragung über das Internet 6 zu wählen, und für den Fall, daß die Dienstequalität angehoben, insbesondere die Bandbreite der Datenübertragung erhöht werden soll, durch einfaches Auslösen eines Steuerbefehls während der bestehenden L7-Verbindung, also ohne Unterbrechung etwa des Telefongespräches, auf eine breitbandigere Datenübertragung zu wechseln.

Ebenso kann vorgesehen sein, zunächst eine Verbindung über das Leitungsvermittlungsnetz vorzunehmen und bei Wunsch dann auf eine Übertragung über das Paketvermittlungsnetz zu wechseln.

Die Erfindung beschränkt sich in Ihrer Anwendung nicht auf das vorgenannte Ausführungsbeispiel. Wesentlich für die Erfindung ist allein, das daß die Daten bei Vorliegen eines durch einen Nutzer oder ein Netzwerkmanagement ausgelösten Steuersignals mittels gesonderter Switch-Einrichtungen nicht mehr über ein Paketvermittlungsnetz, sondern mit höherer Bandbreite bzw. Dienstgüte über ein Leitungsvermittlungsnetz übertragen werden oder umgekehrt.

## Patentansprüche

1. Verfahren zur Übertragung von Daten von einer ersten TK-Einheit (1a, 1b) zu einer zweiten TK-Einheit (10a, 10b), bei dem die zu übertragenden Daten zumindest teilweise über ein Paketvermittlungsnetz (6) übertragbar sind und hierzu Paketvermittlungseinrichtungen (5, 7) passieren, die die Daten vor Eintritt in das Paketvermittlungsnetz (6) paketieren und nach Verlassen des Paketvermittlungsnetzes (6) depaketieren, wobei die Daten bei Vorliegen eines durch einen Nutzer oder ein Netzwerkmanagement ausgelösten Steuersignals mittels Switch-Einrichtungen (4a, 4b) unter Umgehung des Paketvermittlungsnetzes (6) über ein Leitungsvermittlungsnetz (9) übertragen werden, ohne dass die Verbindung zwischen den TK-Einheiten (1a, 1b; 10a, 10b) dabei unterbrochen wird,
**dadurch gekennzeichnet, daß**
- die Daten bei Übertragung über ein Paketvermittlungsnetz (6) zunächst eine erste Switch-Einrichtung (4a) und anschließend eine Paketvermittlungseinrichtung (5) passieren, die beide Teil eines Leitungsvermittlungsnetzes sind, wobei die Switch-Einrichtung (4a) als gegenüber der Paketvermittlungseinrichtung (5) gesonderte Einheit ausgeführt ist,
- die Daten in nicht paketierter Form von der Switch-Einrichtung (4a) an die Paketvermittlungseinrichtung (5) gesandt und
- die Daten bei Übertragung über ein Leitungsvermittlungsnetz (9) von der Switch-Einrichtung (4a) unter Umgehung der Paketvermittlungseinrichtungen (5, 7) an das Leitungsvermittlungsnetz (9) geleitet werden.

2. Verfahren nach Anspruch 1, **dadurch gekennzeichnet, daß** das Vorliegen eines Steuersignals von der ersten Switch-Einrichtung (4a) geprüft wird und die Switch-Einrichtung (a) bei Vorliegen eines entsprechenden Steuersignals eine Datenübertragung über das Leitungsvermittlungsnetz (9) veranlaßt.

3. Verfahren nach Anspruch 1 oder 2, **dadurch gekennzeichnet, daß** die Daten zu einer zweiten Switch-Einrichtung (4b) übertragen werden, die einer Paketvermittlungseinrichtung (7) zum Depaketieren der Daten nachgeschaltet ist.

4. Verfahren nach Anspruch 2 oder 3, **dadurch gekennzeichnet, daß** die Daten in der ersten Switch-Einrichtung (4a) verdoppelt und sowohl über das Leitungsvermittlungsnetz (9) als auch wie bisher über das Paketvermittlungsnetz (6) übertragen werden.

5. Verfahren nach Anspruch 4, **dadurch gekennzeichnet, daß** die zweite Switch-Einrichtung (4b) die vom Paketvermittlungsnetz (6) kommenden Daten der fraglichen Verbindung unterdrückt.

6. Verfahren nach Anspruch 5, **dadurch gekennzeichnet, daß** die zweite Switch-Einrichtung (4b) die zu unterdrückenden Daten anhand der Absenderinformation identifiziert und der gleichen Verbindung zuordnet.

7. Verfahren nach Anspruch 3, **dadurch gekennzeichnet, daß** die Daten bei Übertragung über das Leitungsvermittlungsnetz (9) ausschließlich über dieses Netz (9) übertragen werden.

8. Verfahren nach mindestens einem der Ansprüche 3 bis 7, **dadurch gekennzeichnet, daß** das Steuersignal ein definiertes DTMF-Signal ist.

9. Verfahren nach mindestens einem der vorangehenden Ansprüche, **dadurch gekennzeichnet, daß** es sich bei den zu übertragenden Daten um Audio-, Video- und/oder Faxdaten und bei den Paketvermittlungseinrichtungen um Voiceover-IP Server, Voice over ATM Server oder Voice over Frame Relay Server handelt, die die Audio-, Video- und/oder Faxdaten über das Paketvermittlungsnetz routen.

10. Verfahren nach mindestens einem der vorangehenden Ansprüche, **dadurch gekennzeichnet, daß** die erste und/oder zweite TK-Einheit (10a, 10b) ein analoges Telefon, ein ISDN-Telefon, ein Bildtelefon, ein Faxgerät, ein Personal Computer mit Telefonie-Software oder ein beliebiger Switch oder Router ist.

11. Verfahren nach mindestens einem der vorangehenden Ansprüche, **dadurch gekennzeichnet, daß** die Daten zunächst über das Leitungsvermittlungsnetz unter Umgehung des Paketvermittlungsnetzes (6) und der Paketvermittlungseinrichtungen (5, 7) übertragen werden und bei Vorliegen eines entsprechenden Steuersignals auf eine Datenübertragung über das Paketvermittlungsnetz (6) gewechselt wird.

12. Switch-Einrichtung zur Durchführung des Verfahrens nach Anspruch 1, mit
a) einem logischen Dateneingang (41),
b) einem ersten logischen Ausgang (42) zu einem Paketvermittlungsnetz (6),
c) einem zweiten logischen Ausgang (43) zu einem Leitungsvermittlungsnetz (9) und
d) einer Steuereinrichtung (44), die während einer bestehenden Verbindung in Abhängigkeit von Steuersignalen eines Nutzers einer TK-Einheit (1a, 1b; 10a, 10b) oder eines Netzwerkmanagements ankommende Daten einer Verbindung entweder zum ersten logischen Ausgang (42) oder zum zweiten logischen Ausgang (43) leitet,
**dadurch gekennzeichnet,**
**daß** die am Dateneingang (41) anliegende Daten ohne eine Paketierung zum ersten logischen Ausgang (42) geleitet werden und dort als nicht paketierte Daten vorliegen.

13. Switch-Einrichtung nach Anspruch 12, **dadurch gekennzeichnet, daß** zwischen der Steuereinrichtung (44) und dem zweiten logischen Ausgang (43) eine Line-Switching-Einrichtung (45) zum Durchschalten von Fernsprechkanälen über das Leitungsvermittlungsnetz (9) angeordnet ist.

14. Switch-Einrichtung nach Anspruch 12 oder 13, **dadurch gekennzeichnet, daß** die Steuereinrichtung (44) Mittel zum Erkennen und Auswerten von Codesignalen, insbesondere DTMF-Signalen aufweist.

## Claims

1. Method for transmission of data from a first telecommunications unit (1a, 1b) to a second telecommunications unit (10a, 10b), in which the data to be transmitted can be transmitted at least partially via a packet switching network (6), and for this purpose passes through packet switching devices (5, 7) which packetize the data before it enters the packet switching network (6) and depacketize the data after it leaves the packet switching network (6), with the data being transmitted via a line switching network (9), without the connection between the telecommunications units (1a, 1b; 10a, 10b) being interrupted in the process, by means of switching devices (4a, 4b) and bypassing the packet switching network (6) while a control signal which is triggered by a user or a network management is present,
**characterized in that**
- for transmission via a packet switching network (6), the data first of all passes through a first switching device (4a) and then through a packet switching device (5), which are both part of a line switching network, with the switching device (4a) being in the form of a unit which is separate from the packet switching device (5),
- the data is sent in non-packetized form from the switching device (4a) to the packet switching device (5), and
- for transmission via a line switching network (9), the data is passed from the switching device (4a) to the line switching network (9), bypassing the packet switching devices (5, 7).

2. Method according to Claim 1, **characterized in that** the presence of a control signal is checked by the first switching device (4a), and the switching device (a) causes data to be transmitted via the line switching network (9) when a corresponding control signal is present.

3. Method according to Claim 1 or 2, **characterized in that** the data is transmitted to a second switching device (4b), which is connected downstream of a packet switching device (7) for depacketization of the data.

4. Method according to Claim 2 or 3, **characterized in that** the data is duplicated in the first switching device (4a) and is transmitted both via the line switching network (9) and, as before, via the packet switching network (6).

5. Method according to Claim 4, **characterized in that** the second switching device (4b) suppresses the data coming from the packet switching network (6) on the questionable link.

6. Method according to Claim 5, **characterized in that** the second switching device (4b) identifies the data to be suppressed on the basis of the sender information, and allocates it to the same link.

7. Method according to Claim 3, **characterized in that**, for transmission via the line switching network (9), the data is transmitted exclusively via this network (9).

8. Method according to at least one of Claims 3 to 7, **characterized in that** the control signal is a defined DTMF signal.

9. Method according to at least one of the preceding claims, **characterized in that** the data to be transmitted is audio, video and/or fax data and, in the case of packet switching devices, is voice over IP server, voice over ATM server or voice over frame relay server, which route the audio, video and/or fax data via the packet switching network.

10. Method according to at least one of the preceding claims, **characterized in that** the first and/or the second telecommunications unit (10a, 10b) are/is an analogue telephone, an ISDN telephone, a video telephone, a fax machine, a personal computer with telephony software, or any desired switch or router.

11. Method according to at least one of the preceding claims, **characterized in that** the data is first of all transmitted via the line switching network, bypassing the packet switching network (6) and the packet switching devices (5, 7) and, when an appropriate control signal is present, the change is made to data transmission via the packet switching network (6).

12. Switching device for carrying out the method according to Claim 1, having
a) a logic data input (41),
b) a first logic output (42) to a packet switching network (6),
c) a second logic output (43) to a line switching network (9), and
d) a control device (44) which, when a link exists, passes incoming data on a link either to the first logic output (42) or to the second logic output (43) as a function of control signals from a user on a telecommunications unit (1a, 1b; 10a, 10b) or from network management,
**characterized**
**in that** the data applied to the data input (41) is passed without any packetization to the first logic output (42), where it is produced as non-packetized data.

13. Switching device according to Claim 12, **characterized in that** a line switching device (45) is arranged between the control device (44) and the second logic output (43), in order to switch-through telephone channels via the line switching network (9).

14. Switching device according to Claim 12 or 13, **characterized in that** the control device (44) has means for identification and evaluation of code signals, in particular DTMF signals.

## Revendications

1. Procédé pour le transfert de données d'une première installation de télécommunication (1a, 1b) à une deuxième installation de télécommunication (10a, 10b), au cours duquel les données à transférer peuvent être transférées au moins en partie par le biais d'un réseau à commutation de paquets (6) et traversent pour cela des dispositifs de commutation de paquets (5, 7) qui mettent les données en paquets avant leur entrée dans le réseau à commutation de paquets (6) et les dépaquettent après leur sortie du réseau à commutation de paquets (6), dans lequel, en cas de présence d'un signal de commande déclenché par un utilisateur ou un système de gestion de réseau, les données sont transférées au moyen de dispositifs de commutation (4a, 4b) à travers un réseau à commutation de lignes (9) en évitant le réseau à commutation de paquets (6) sans que la liaison entre les installations de télécommunication (1a, 1b ; 10a, 10b) soit à cette occasion interrompue,
**caractérisé en ce que**
- les données, lors du transfert par le biais d'un réseau à commutation de paquets (6), traversent d'abord un premier dispositif de commutation (4a) et ensuite un dispositif de commutation de paquets (5) qui font tous deux partie d'un réseau à commutation de lignes, dans lequel le dispositif de commutation (4a) représente une unité particulière par rapport au dispositif de commutation de paquets (5),
- les données sous une forme non mise en paquet sont envoyées par le dispositif de commutation (4a) au dispositif de commutation de paquets (5) et
- les données, lors du transfert par le biais d'un réseau à commutation de lignes (9), sont acheminées par le dispositif de commutation (4a) au réseau à commutation de lignes (9) en évitant les dispositifs de commutation de paquets (5, 7).

2. Procédé selon la revendication 1, **caractérisé en ce que** le premier dispositif de commutation (4a) vérifie la présence d'un signal de commande et **en ce que** le dispositif de commutation (4a), en cas de présence d'un signal de commande correspondant, ordonne un transfert des données par le biais du réseau à commutation de lignes (9).

3. Procédé selon la revendication 1 ou 2, **caractérisé en ce que** les données sont transférées à un deuxième dispositif de commutation (4b) qui est branché en aval d'un dispositif de commutation de paquets (7) afin de dépaqueter les données.

4. Procédé selon la revendication 2 ou 3, **caractérisé en ce que** les données dans le premier dispositif de commutation (4a) sont dédoublées et transférées aussi bien par le biais du réseau à commutation de lignes (9) que, comme dans l'art antérieur, par le biais du réseau à commutation de paquets (6).

5. Procédé selon la revendication 4, **caractérisé en ce que** le deuxième dispositif de commutation (4b) supprime les données de la liaison incertaine, venant du réseau à commutation de paquets (6).

6. Procédé selon la revendication 5, **caractérisé en ce que** le deuxième dispositif de commutation (4b) identifie les données à supprimer à l'aide des informations de l'expéditeur et les associe à la même liaison.

7. Procédé selon la revendication 3, **caractérisé en ce que**, en cas de transfert par le biais d'un réseau à commutation de lignes (9), les données sont transférées exclusivement par le biais de ce réseau (9).

8. Procédé selon au moins l'une quelconque des revendications 3 à 7, **caractérisé en ce que** le signal de commande est un signal de multifréquence à deux tonalités déterminé.

9. Procédé selon au moins l'une quelconque des revendications précédentes, **caractérisé en ce qu'**il s'agit quant aux données à transférer de données audio, vidéo et/ou de données de télécopie et quant aux dispositifs de commutation de paquets de serveurs Voix sur IP, de serveurs Voix sur ATM ou de serveurs Voix sur relais de trame qui acheminent les données audio, vidéo et/ou les données de télécopie par le biais du réseau à commutation de paquets.

10. Procédé selon au moins l'une quelconque des revendications précédentes, **caractérisé en ce que** la première et/ou la deuxième installation de télécommunication (10a, 10b) est un téléphone analogique, un téléphone RNIS, un vidéophone, un télécopieur, un ordinateur individuel avec logiciel de téléphonie ou un commutateur ou routeur quelconque.

11. Procédé selon au moins l'une quelconque des revendications précédentes, **caractérisé en ce que** les données sont d'abord transmises par le biais du réseau à commutation de lignes en évitant le réseau à commutation de paquets (6) et les dispositifs de commutation de paquets (5, 7), et que, en cas de présence d'un signal de commande correspondant, on passe à un transfert de données par le biais du réseau à commutation de paquets (6).

12. Dispositif de commutation destiné à exécuter le procédé selon la revendication 1, avec
a) une entrée de données logique (41),
b) une première sortie logique (42) vers un réseau à commutation de paquets (6),
c) une deuxième sortie logique (43) vers un réseau à commutation de lignes (9) et
d) un dispositif de commande (44) qui, au cours d'une liaison présente et en fonction des signaux de commande d'un utilisateur d'une installation de télécommunication (1a, 1b ; 10a, 10b) ou d'un système de gestion de réseau, dirige des données arrivantes d'une liaison soit vers la première sortie logique (42) soit vers la deuxième sortie logique (43),
**caractérisé en ce que**,
les données présentes à l'entrée de données (41) sont dirigées vers la première sortie logique (42) sans être mises en paquet et qu'elles sont présentes là en tant que données non mises en paquet.

13. Dispositif de commutation selon la revendication 12, **caractérisé en ce qu'**un dispositif de commutation de lignes (45) est disposé entre le dispositif de commande (44) et la deuxième sortie logique (43) afin de connecter les voies téléphoniques au réseau à commutation de lignes (9).

14. Dispositif de commutation selon la revendication 12 ou 13, **caractérisé en ce que** le dispositif de commande (44) présente des moyens destinés à détecter et évaluer des signaux de code, en particulier des signaux de multifréquence à deux tonalités.
